# EUROPEAN PATENT APPLICATION

(11) **EP 2 738 029 A1**
(43) Date of publication of application: **04.06.2014**
(21) Application number: 11869826.5
(22) Date of filing: 27.07.2011
(51) Int. Cl.: B60K 6/365, B60K 6/445

(54) **DRIVE DEVICE FOR HYBRID VEHICLE**

(71) Applicant: Toyota Jidosha Kabushiki Kaisha, Toyota-shi, Aichi 471-8571 (JP)
(72) Inventor: ONO, Tomohito, Toyota-shi Aichi 471-8571 (JP); IWASE, Yuji, Toyota-shi Aichi 471-8571 (JP); SUZUKI, Yosuke, Toyota-shi Aichi 471-8571 (JP); HATA, Kensei, Toyota-shi Aichi 471-8571 (JP)
(74) Representative: Intès, Didier Gérard André
(86) International application number: PCT/JP2011/067165
(87) International publication number: WO 2013/014777

(57) **Abstract**

A hybrid vehicle driving apparatus includes: a first planetary gear mechanism (10); a second planetary gear mechanism (20); a clutch (4) that connects and disconnects a carrier (14) of the first planetary gear mechanism to and from a carrier (24) of the second planetary gear mechanism; and a brake (5) that regulates the rotation of the carrier of the second planetary gear mechanism by engaging, in which a sun gear (11), the carrier, and a ring gear (13) of the first planetary gear mechanism are respectively connected to a first rotating electric machine (MG1), an engine (1), and a driving wheel, and a sun gear (21) and a ring gear (23) of the second planetary gear mechanism are respectively connected to a second rotating electric machine (MG2) and the driving wheel.

## Description

### TECHNICAL FIELD

The present embodiment relates to a hybrid vehicle driving apparatus.

### BACKGROUND ART

Hybrid vehicle driving apparatuses are conventionally known. For example, Patent Document 1 and Patent Document 2 disclose the techniques of powertrains that can change between two modes which are an input split mode and a mixed split mode.

### PRIOR ART DOCUMENTS

### PATENT DOCUMENTS

Patent Document 1: United States Patent No. 6478705 Specification
Patent Document 2: United States Patent Application Publication No. 2008/0053723 Specification

### SUMMARY OF THE INVENTION

### PROBLEM TO BE SOLVED BY THE INVENTION

Efficiency of the hybrid vehicle can be improved further. For example, if transmission efficiency can be improved when the rotation is transmitted from an input side to an output side at low reduction gear ratio in the hybrid vehicle driving apparatus, the efficiency during high-speed driving can be improved.

The object of the present invention is to provide the hybrid vehicle driving apparatus that can improve the efficiency of the hybrid vehicle.

### MEANS FOR SOLVING THE PROBLEM

The hybrid vehicle driving apparatus of the present invention includes: a first planetary gear mechanism; a second planetary gear mechanism; a clutch that connects and disconnects a carrier of the first planetary gear mechanism to and from a carrier of the second planetary gear mechanism; and a brake that regulates the rotation of the carrier of the second planetary gear mechanism by engaging, in which a sun gear, the carrier, and a ring gear of the first planetary gear mechanism are respectively connected to a first rotating electric machine, an engine, and a driving wheel, and a sun gear and a ring gear of the second planetary gear mechanism are respectively connected to a second rotating electric machine and the driving wheel.

In the hybrid vehicle driving apparatus described above, it is preferable that the brake and the clutch be independently engaged, and thus driving according to a Mode 2 be enabled.

In the hybrid vehicle driving apparatus described above, it is preferable that an alignment order of rotating elements of the first planetary gear mechanism and the second planetary gear mechanism in the collinear chart when the clutch is engaged and the brake is disengaged be in the order of the sun gear of the first planetary gear mechanism, the sun gear of the second planetary gear mechanism, the carrier of the first planetary gear mechanism and the carrier of the second planetary gear mechanism, and the ring gear of the first planetary gear mechanism and the ring gear of the second planetary gear mechanism.

In the hybrid vehicle driving apparatus described above, it is preferable that, in hybrid driving in which the hybrid vehicle is driven by at least the engine as a power source, at least two modes of a Mode 3 in which the clutch is disengaged and the brake is engaged, a Mode 4 in which the clutch is engaged and the brake is disengaged, a Mode 5 in which the clutch and the brake are disengaged can be selectively implemented.

In the hybrid vehicle driving apparatus described above, it is preferable that the driving according to a Mode 1 be enabled by disengaging the clutch and engaging the brake.

In the hybrid vehicle driving apparatus described above, it is preferable that, on the same axis as a rotating shaft of the engine, the first rotating electric machine, the first planetary gear mechanism, the clutch, the second planetary gear mechanism, the brake, and the second rotating electric machine be disposed in this order from a side close to the engine.

In the hybrid vehicle driving apparatus described above, it is preferable that, on the same axis as a rotating shaft of the engine, the first rotating electric machine, the first planetary gear mechanism, the second rotating electric machine, the second planetary gear mechanism, the clutch, and the brake be disposed in this order from a side close to the engine.

In the hybrid vehicle driving apparatus described above, it is preferable that, on the same axis as a rotating shaft of the engine, the first planetary gear mechanism, the clutch, the second planetary gear mechanism, the brake, the second rotating electric machine, and the first rotating electric machine be disposed in this order from a side close to the engine.

It is preferable that the hybrid vehicle driving apparatus described above further includes a one-way clutch that permits the rotation of the carrier of the second planetary gear mechanism in a forward direction in the case where a rotational direction of the ring gear of the second planetary gear mechanism when the hybrid vehicle travels forward is determined to be the forward direction, and regulates the rotation in an opposite direction to the forward direction.

### EFFECT OF THE INVENTION

The hybrid vehicle driving apparatus according to the present invention includes: a first planetary gear mechanism; a second planetary gear mechanism; a clutch that connects and disconnects a carrier of the first planetary gear mechanism to and from a carrier of the second planetary gear mechanism; and a brake that regulates the rotation of the carrier of the second planetary gear mechanism by engaging, in which a sun gear, the carrier, and a ring gear of the first planetary gear mechanism are respectively connected to a first rotating electric machine, an engine, and a driving wheel, and a sun gear and a ring gear of the second planetary gear mechanism are respectively connected to a second rotating electric machine and the driving wheel. The hybrid vehicle driving apparatus according to the present invention can configure multiple modes and provide the effect to achieve the efficiency improvement by driving in a suitable mode for the driving condition.

### BRIEF DESCRIPTION OF THE DRAWINGS

[FIG. 1] FIG. 1 is a schematic diagram that shows the principal parts of the hybrid vehicle according to a first embodiment.
[FIG. 2] FIG. 2 is a table that shows the engagement in driving modes according to the first embodiment.
[FIG. 3] FIG. 3 is a collinear chart in an EV-1 mode.
[FIG. 4] FIG. 4 is a collinear chart in an EV-2 mode.
[FIG. 5] FIG. 5 is a collinear chart in an HV-1 mode.
[FIG. 6] FIG. 6 is a collinear chart in an HV-2 mode.
[FIG. 7] FIG. 7 is a collinear chart for four elements in the HV-2 mode.
[FIG. 8] FIG. 8 is a chart that shows theoretical transmission efficiency lines according to the first embodiment.
[FIG. 9] FIG. 9 is a schematic diagram that shows the principal parts of the hybrid vehicle according to a first modification of the first embodiment.
[FIG. 10] FIG. 10 is a schematic diagram that shows the principal parts of the hybrid vehicle according to a second modification of the first embodiment.
[FIG. 11] FIG. 11 is a schematic diagram that shows the principal parts of the hybrid vehicle according to a second embodiment.

### MODES FOR CARRYING OUT THE INVENTION

Hereinafter, the hybrid vehicle driving apparatus according to the embodiments of the present invention is described in detail with reference to the drawings. It should be noted that the present invention is not limited to the embodiments.

### [First Embodiment]

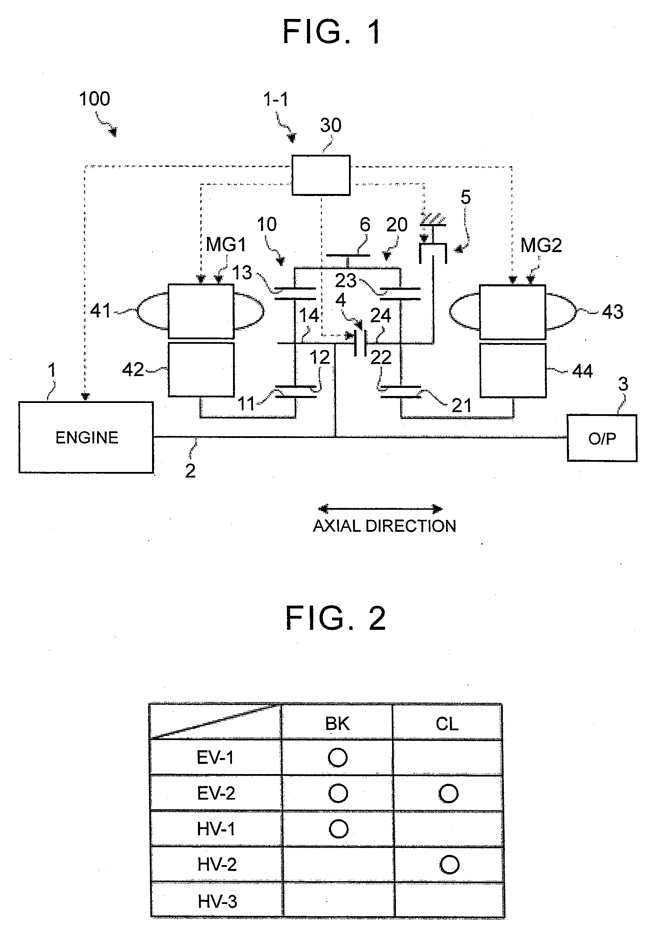

A first embodiment is described with reference to FIG. 1 through FIG. 8. The present embodiment relates to the hybrid vehicle driving apparatus. FIG. 1 is a schematic diagram that shows the principal parts of a hybrid vehicle according to the first embodiment of the present invention, and FIG. 2 is a table that shows the engagement in driving modes according to the first embodiment.

As shown in FIG. 1, the hybrid vehicle 100 includes an engine 1, a first rotating electric machine MG1, a second rotating electric machine MG2, an oil pump 3, and the hybrid vehicle driving apparatus 1-1. The hybrid vehicle driving apparatus 1-1 of the present embodiment includes a first planetary gear mechanism 10, a second planetary gear mechanism 20, a clutch 4, and a brake 5. The clutch 4 is a clutch device that connects and disconnects a first carrier 14 that is a carrier of the first planetary gear mechanism 10 to and from a second carrier 24 that is a carrier of the second planetary gear mechanism 20. The brake 5 can regulate the rotation of the second carrier 24 by engagement.

A first sun gear 11 that is a sun gear of the first planetary gear mechanism 10 is connected to the first rotating electric machine MG1, the first carrier 14 is connected to the engine 1, and a first ring gear 13 that is a ring gear of the first planetary gear mechanism 10 is connected to a driving wheel of the hybrid vehicle 100. In addition, a second sun gear 21 that is a sun gear of the second planetary gear mechanism 20 is connected to the second rotating electric machine MG2, and a second ring gear 23 that is a ring gear of the second planetary gear mechanism 20 is connected to a driving wheel of the hybrid vehicle 100. It should be noted that the first ring gear 13 and the second ring gear 23 may not be connected to the driving wheels directly and may be connected to the driving wheels through a differential mechanism or an output shaft, for example.

The engine 1 converts the energy on combustion of fuel into rotational motion to output to a rotating shaft 2. The rotating shaft 2 extends in the vehicle width direction of the hybrid vehicle 100, for example. Unless otherwise specified, the "axial direction" herein indicates the axial direction of the rotating shaft 2. The oil pump 3 is disposed in the end opposite to the engine side of the rotating shaft 2. The oil pump 3 is driven by the rotation of the rotating shaft 2 to discharge lubricant. The lubricant discharged by the oil pump 3 is fed to the components such as the first rotating electric machine MG1, the second rotating electric machine MG2, the first planetary gear mechanism 10, and the second planetary gear mechanism 20.

Each of the first rotating electric machine MG1 and the second rotating electric machine MG2 has the functions as a motor (electric motor) and as a generator. The first rotating electric machine MG1 and the second rotating electric machine MG2 are connected to a battery through an inverter. The first rotating electric machine MG1 and the second rotating electric machine MG2 can convert electric power that is supplied from the battery into mechanical power and output, and also can be driven by the inputted power and convert the mechanical power into the electric power. The electric power generated by the rotating electric machines MG1, MG2 can be stored in the battery. As the first rotating electric machine MG1 and the second rotating electric machine MG2, an alternating-current synchronous type motor generator can be used, for example.

The first rotating electric machine MG1 has a stator 41 and a rotor 42. The rotor 42 is coaxially disposed on the first sun gear 11, connected to the first sun gear 11, and rotates together with the first sun gear 11. The second rotating electric machine MG2 has a stator 43 and a rotor 44. The rotor 44 is coaxially disposed on the second sun gear 21, connected to the second sun gear 21, and rotates together with the second sun gear 21.

The first planetary gear mechanism 10 and the second planetary gear mechanism 20 are coaxially disposed on the rotating shaft 2 and face to each other in the axial direction. The first planetary gear mechanism 10 is disposed on the engine side in the axial direction from the second planetary gear mechanism 20. The first rotating electric machine MG1 is disposed on the engine side in the axial direction from the first planetary gear mechanism 10, and the second rotating electric machine MG2 is disposed on the opposite side to the engine side in the axial direction from the second planetary gear mechanism 20. In other words, the first rotating electric machine MG1 and the second rotating electric machine MG2 face to each other in the axial direction with the first planetary gear mechanism 10 and the second planetary gear mechanism 20 interposed therebetween. On the same axis as the rotating shaft 2 of the engine 1, the first rotating electric machine MG1, the first planetary gear mechanism 10, the clutch 4, the second planetary gear mechanism 20, the brake 5, and the second rotating electric machine MG2 are disposed in this order from the side close to the engine 1.

The first planetary gear mechanism 10 is of single pinion type and has the first sun gear 11, a first pinion gear 12, the first ring gear 13, and the first carrier 14. The first ring gear 13 is coaxially disposed with the first sun gear 11 and on a radial outside of the first sun gear 11. The first pinion gear 12 is disposed between the first sun gear 11 and the first ring gear 13 and meshes with both of the first sun gear 11 and the first ring gear 13. The first pinion gear 12 is rotatably supported by the first carrier 14. The first carrier 14 is connected to the rotating shaft 2 and rotates together with the rotating shaft 2. Accordingly, the first pinion gear 12 can rotate around the central axis of the rotating shaft 2 (revolution) together with the rotating shaft 2 of the engine 1 and can be supported by the first carrier 14 to rotate around the central axis of the first pinion gear 12 (rotation).

The second planetary gear mechanism 20 is of single pinion type and has the second sun gear 21, a second pinion gear 22, the second ring gear 23, and the second carrier 24. The second ring gear 23 is coaxially disposed with the second sun gear 21 and on a radial outside of the second sun gear 21. The second pinion gear 22 is disposed between the second sun gear 21 and the second ring gear 23 and meshes with both of the second sun gear 21 and the second ring gear 23. The second pinion gear 22 is rotatably supported by the second carrier 24. The second carrier 24 is rotatably supported on the same axis as the rotating shaft 2. Accordingly, the second pinion gear 22 can rotate around the central axis of the rotating shaft 2 (revolution) together with the second carrier 24 and can be supported by the second carrier 24 to rotate around the central axis of the second pinion gear 22 (rotation).

The second carrier 24 is connected to the first carrier 14 through the clutch 4. The clutch 4 connects and disconnects the first carrier 14 to and from the second carrier 24. The clutch 4 can regulate the relative rotation of the first carrier 14 and the second carrier 24 by engagement and can rotate the first carrier 14 and the second carrier 24 together. On the other hand, the clutch 4 can disconnect the first carrier 14 from the second carrier 24 by disengagement and can bring the first carrier 14 and the second carrier 24 to rotate independently of each other.

The brake 5 can regulate the rotation of the second carrier 24. The brake 5 can regulate the rotation of the second carrier 24 by the engagement of an engaging element on the side of the second carrier 24 and an engaging element on the vehicle body side and can stop the rotation of the second carrier 24. On the other hand, the brake 5 can allow the rotation of the second carrier 24 by disengagement.

The clutch 4 and the brake 5 can employ dog teeth mating types; however, the present invention is not limited to this type, and friction engagement types may be employed. An actuator for driving the clutch 4 or an actuator for driving the brake 5 can be operated by electromagnetic force or hydraulic pressure or can be use other well-known actuators. In the case of using the dog tooth mating type, dragging loss during the disengagement can be reduced in comparison with the friction engagement type by using a wet friction material, and high efficiency can be achieved. In addition, in the case of using an electromagnetic actuator for the dog teeth, a hydraulic circuit for the clutch 4 or the brake 5 can be eliminated, and the simplification of T/A and a weight reduction can be achieved. When the hydraulic actuator is employed, an electric oil pump may be used as a hydraulic power source.

The clutch 4 and the brake 5 may be the types of disengaging by the driving force of the actuator against a biasing force of a return spring and the like or engaging by the driving force of the actuator against the biasing force.

The first ring gear 13 and the second ring gear 23 are connected to each other for rotating together. In the present embodiment, the ring gears 13, 23 are internal gears that are formed on the inner peripheries of cylindrical rotating bodies, and an output gear 6 is formed on the outer periphery of a rotating body. The output gear 6 is connected to the output shaft of the hybrid vehicle 100 through the differential mechanism and the like. The output gear 6 is an output part that outputs the power transmitted from the engine 1, and the rotating electric machines MG1, MG2 through the planetary gear mechanisms 10, 20 to the driving wheels. The power transmitted from the engine 1, the first rotating electric machine MG1, and the second rotating electric machine MG2 to the output gear 6 is transmitted to the driving wheels of the hybrid vehicle 100 through the output shaft. In addition, the power inputted from a road surface to the driving wheels is transmitted from the output gear 6 to the hybrid vehicle driving apparatus 1-1 through the output shaft.

An ECU 30 is an electronic control unit that has a computer. The ECU 30 is connected to each of the engine 1, the first rotating electric machine MG1, and the second rotating electric machine MG2 and can control the engine 1, the first rotating electric machine MG1, and the second rotating electric machine MG2. In addition, the ECU 30 can control the engagement/disengagement of the clutch 4 and the brake 5. When the electric oil pump is provided as the hydraulic power source of the clutch 4 and the brake 5, the ECU 30 can control the electric oil pump.

The hybrid vehicle 100 can selectively implement hybrid driving or EV driving. The hybrid driving is a driving mode in which the hybrid vehicle 100 is driven by at least the engine 1 as a power source among the engine 1, the first rotating electric machine MG1, and the second rotating electric machine MG2. In the hybrid driving, at least one of the first rotating electric machine MG1 and the second rotating electric machine MG2 in addition to the engine 1 may be used as the power source, or one of the first rotating electric machine MG1 and the second rotating electric machine MG2 may function as the power source, and the other may function as a reaction receiving part of the engine 1. In addition, the first rotating electric machine MG1 and the second rotating electric machine MG2 may appropriately function as the motors or the generators in accordance with the mode described below or can idle in a no-load state.

The EV driving is a driving mode in which the engine 1 stops and at least one of the first rotating electric machine MG1 and the second rotating electric machine MG2 is used as the power source for driving. In the EV driving, at least one of the first rotating electric machine MG1 and the second rotating electric machine MG2 may generate electric power in accordance with driving conditions, charging conditions of the battery, or the like, or at least one of the first rotating electric machine MG1 and the second rotating electric machine MG2 may idle.

The hybrid vehicle driving apparatus 1-1 according to the present embodiment can implement five modes as shown in FIG. 2 in accordance with the combination of the engagement/disengagement of the clutch 4 and the brake 5. In FIG. 2, a circle symbol in the BK column indicates the engagement of the brake 5, and a blank in the BK column indicates the disengagement of the brake 5. In addition, a circle symbol in the CL column indicates the engagement of the clutch 4, and a blank in the CL column indicates the disengagement of the clutch 4.

### (EV-1 Mode)

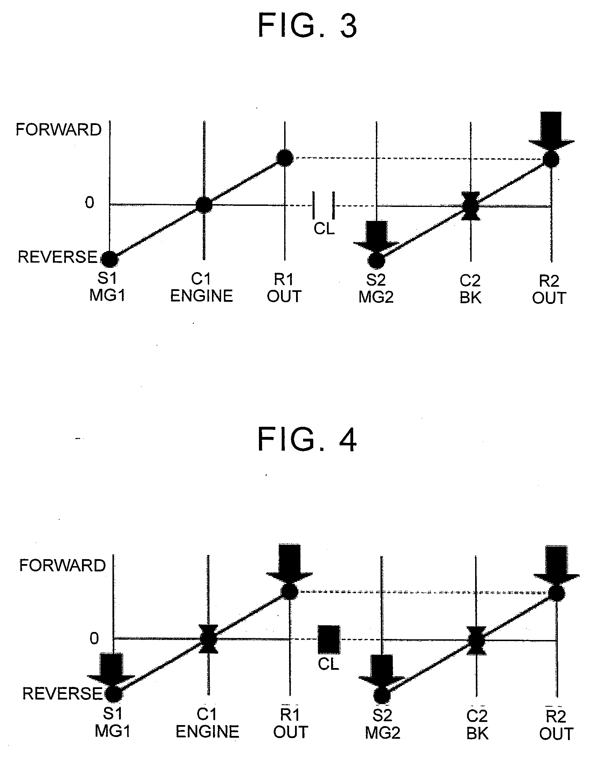

When the brake 5 is engaged and the clutch 4 is disengaged, a Mode 1 (Driving mode 1) is implemented, and the driving according to the Mode 1 is enabled. In the present embodiment, the following EV-1 mode corresponds to the Mode 1. The EV-1 mode is the EV driving mode in which the engine 1 stops and the second rotating electric machine MG2 is used as the power source for driving. In the EV-1 mode, the same EV driving as that in the vehicle equipped with the so-called THS (Toyota Hybrid System) can be achieved. FIG. 3 is a collinear chart in the EV-1 mode. In collinear charts including FIG. 3, S1 denotes the first sun gear 11, C1 denotes the first carrier 14, R1 denotes the first ring gear 13, S2 denotes the second sun gear 21, C2 denotes the second carrier 24, and R2 denotes the second ring gear 23. In addition, CL denotes the clutch 4, BK denotes the brake 5, and OUT denotes the output gear 6. The rotational direction of the first ring gear 13 and second ring gear 23 when the hybrid vehicle 100 travels forward is determined to be a forward direction, and the torque in a forward rotational direction (an up-arrow in the drawing) is determined to be a positive torque.

As shown in FIG. 3, in the EV-1 mode, the clutch 4 is disengaged and thus the first carrier 14 (C1) and the second carrier 24 (C2) can relatively rotate, and the brake 5 is engaged and thus the rotation of the second carrier 24 can be regulated. In the second planetary gear mechanism 20, the rotational direction of the second sun gear 21 is opposite to the rotational direction of the second ring gear 23. When the second rotating electric machine MG2 generates a negative torque and makes reverse rotation, the output gear 6 makes forward rotation by the power of the second rotating electric machine MG2. This allows the hybrid vehicle 100 to travel forward. In the first planetary gear mechanism 10, the first carrier 14 stops, and the first sun gear 11 idles in a reverse direction. In the EV-1 mode, when the regeneration is not allowed in the case where the charging condition of the battery is in a full charge and the like, the second rotating electric machine MG2 idles, and thus the deceleration can be applied to the hybrid vehicle 100 as large inertial amount.

### (EV-2 Mode)

When the brake 5 and the clutch 4 are independently engaged, a Mode 2 (Driving mode 2) is implemented, and the driving according to the Mode 2 is enabled. In the present embodiment, the following EV-2 mode corresponds to the Mode 2. The EV-2 mode is the EV driving mode in which the engine 1 stops and at least one of the first rotating electric machine MG1 and the second rotating electric machine MG2 is used as the power source to cause the hybrid vehicle 100 to travel. FIG. 4 is a collinear chart in the EV-2 mode. In the EV-2 mode, the brake 5 is engaged and the clutch 4 is engaged, and thus the rotation of the first carrier 14 and the rotation of the second carrier 24 are separately regulated. Accordingly, in the first planetary gear mechanism 10, the rotational direction of the first sun gear 11 is opposite to the rotational direction of the first ring gear 13. The first rotating electric machine MG1 can generate the negative torque and make the reverse rotation to cause the forward rotation of the output gear 6 and thus can drive the hybrid vehicle 100 forward. Furthermore, in the second planetary gear mechanism 20, the rotational direction of the second sun gear 21 is opposite to the rotational direction of the second ring gear 23. The second rotating electric machine MG2 can generate the negative torque and make the reverse rotation and thus can drive the hybrid vehicle 100 forward.

In the EV-2 mode, two rotating electric machines that are the first rotating electric machine MG1 and the second rotating electric machine MG2 can be used as the power sources to drive the hybrid vehicle 100. In addition, in the EV-2 mode, the electric power can appropriately be generated by at least one of the first rotating electric machine MG1 and the second rotating electric machine MG2. One of the rotating electric machines or both of the rotating electric machines can share and generate (or regenerate) the torque, and it becomes possible to operate the rotating electric machine at the operating point where the efficiency can be improved or to relax restrictions such as limiting torque due to heat. For example, in accordance with travelling speed, the torque is preferentially outputted (or regenerated) by one of the rotating electric machines MG1, MG2 that can efficiently output the torque, and consequently, the fuel economy can be improved. Furthermore, when the torque is limited due to the heat in either one of the rotating electric machines, a target torque can be achieved with the support of the other rotating electric machine in the output (or regeneration).

In addition, in the EV-2 mode, at least one of the first rotating electric machine MG1 and the second rotating electric machine MG2 can idle. For example, when the regeneration is not allowed in the case where the charging condition of the battery is in a full charge and the like, the first rotating electric machine MG1 and the second rotating electric machine MG2 may simultaneously idle, and thus the deceleration can be applied to the hybrid vehicle 100 as the large inertial amount.

According to the EV-2 mode, the EV driving can be performed under broad driving conditions, or the EV driving can continuously be performed for a long period of time. Therefore, the EV-2 mode is preferably applicable to hybrid vehicles that perform the EV driving with a high proportion such as plug-in hybrid vehicles.

### (HV-1 Mode)

When the brake 5 is engaged and the clutch 4 is disengaged, a Mode 3 (Driving mode 3) is implemented, and the driving according to the Mode 3 is enabled. In the present embodiment, the following HV-1 mode corresponds to the Mode 3. The HV-1 mode allows the hybrid driving similar to the hybrid driving in the vehicle equipped with the THS.

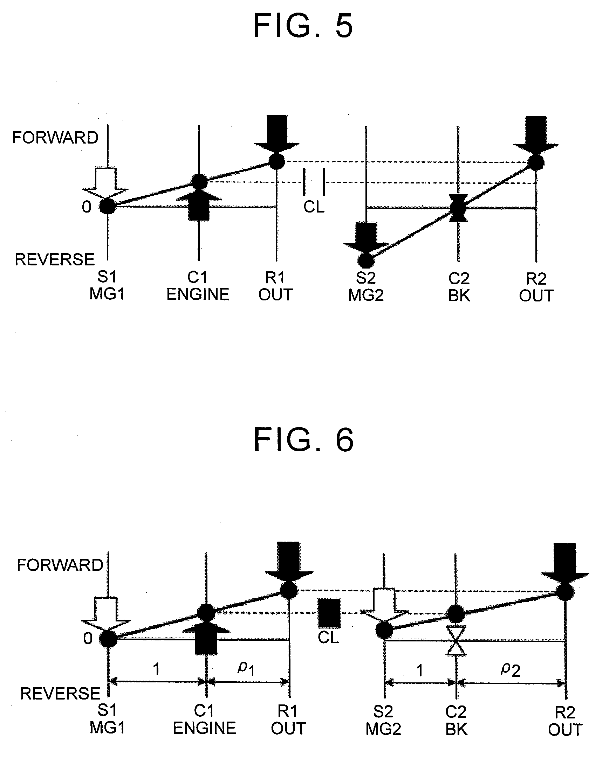

FIG. 5 is a collinear chart in the HV-1 mode. In the HV-1 mode, the engine 1 is driven to rotate the output gear 6 by the power of the engine 1. In the first planetary gear mechanism 10, the first rotating electric machine MG1 generates the negative torque to receive the reaction force, and thus the power can be transmitted from the engine 1 to the output gear 6. In the second planetary gear mechanism 20, the brake 5 is engaged to regulate the rotation of the second carrier 24, and thus the rotational direction of the second sun gear 21 is opposite to the rotational direction of the second ring gear 23. The second rotating electric machine MG2 can generate the negative torque to generate the driving force in the forward direction with respect to the hybrid vehicle 100.

In the hybrid vehicle driving apparatus 1-1 according to the present embodiment, the first ring gear 13 on the output side is positioned, in the collinear chart, on an overdrive side that is the opposite side of the engine 1 therebetween with respect to the first rotating electric machine MG1 that receives the reaction force. Thus, the rotation of the engine 1 is increased in speed and transmitted to the output gear 6.

### (HV-2 Mode)

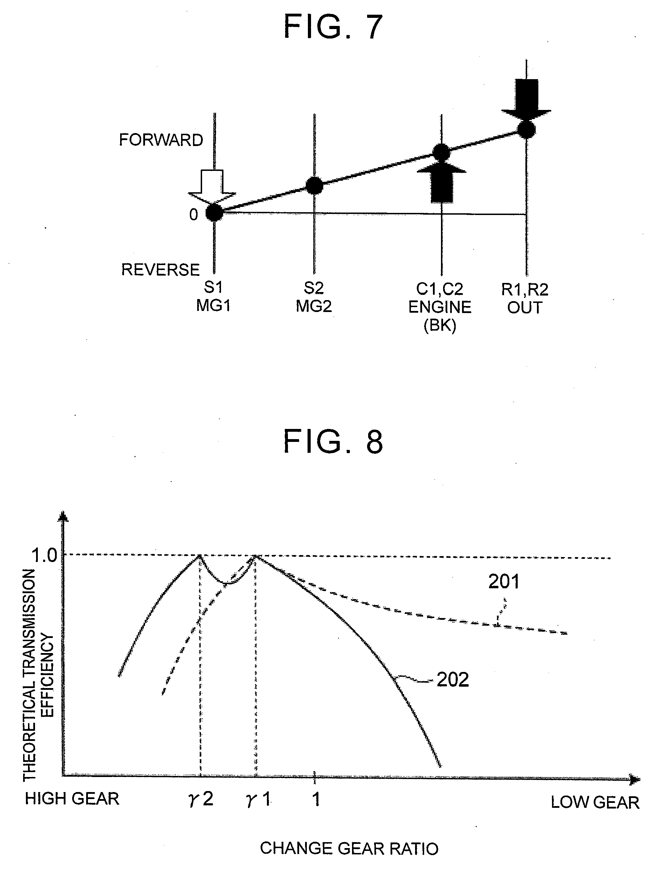

When the brake 5 is disengaged and the clutch 4 is engaged, a Mode 4 (Driving mode 4) is implemented, and the driving according to the Mode 4 is enabled. In the present embodiment, the following HV-2 mode (combined split mode) corresponds to the Mode 4. The HV-2 mode is the combined split mode in which four-element planets are connected to the first rotating electric machine MG1, the second rotating electric machine MG2, the engine 1, and the output gear 6 in this order. As described hereinafter with reference to FIG. 6 through FIG. 8, the HV-2 mode has advantages in which the system has a mechanical point on a high gear side with respect to the HV-1 mode and transmission efficiency during high gear operation can be improved. Here, the mechanical point means a mechanical transmission point that is a high efficiency operating point where zero electrical path exists. FIG. 6 is a collinear chart in the HV-2 mode, FIG. 7 is a collinear chart for four elements in the HV-2 mode, and FIG. 8 is a chart that shows theoretical transmission efficiency lines according to the first embodiment.

During the HV-2 mode, the first ring gear 13 and the second ring gear 23 operate as one rotating element for rotating together, and the first carrier 14 and the second carrier 24 operate as one rotating element for rotating together. Consequently, the first planetary gear mechanism 10 and the second planetary gear mechanism 20 function as four-element planets as a whole.

The collinear chart for the four-element planets including the first planetary gear mechanism 10 and the second planetary gear mechanism 20 is illustrated in FIG. 7. In the present embodiment, the alignment order of the rotating elements of the first planetary gear mechanism 10 and the second planetary gear mechanism 20 in the collinear chart is in the order of the first sun gear 11, the second sun gear 21, the first carrier 14 and the second carrier 24, and the first ring gear 13 and the second ring gear 23. The gear ratio of the first planetary gear mechanism 10 and the gear ratio of the second planetary gear mechanism 20 are determined such that the alignment order of the first sun gear 11 and the second sun gear 21 on the collinear chart becomes the alignment order described above. More specifically, with reference to FIG. 6, in the planetary gear mechanisms 10, 20, the gear ratios ρ1, ρ2 between the carriers 14, 24 and the ring gears 13, 23 in the case where the gear ratio between the sun gears 11, 21 and the carriers 14, 24 is set to 1 are determined such that the gear ratio ρ2 of the second planetary gear mechanism 20 is larger than the gear ratio ρ1 of the first planetary gear mechanism 10.

In the HV-2 mode, the clutch 4 is engaged and connects the first carrier 14 to the second carrier 24. Thus, either the first rotating electric machine MG1 or the second rotating electric machine MG2 can receive the reaction force with respect to the power outputted from the engine 1. Either or both of the first rotating electric machine MG1 and the second rotating electric machine MG2 can share the torque and receive the reaction force of the engine 1, and it becomes possible to operate at the operating point where the efficiency can be improved or to relax the restrictions such as limiting torque due to heat. Therefore, high efficiency to the hybrid vehicle 100 can be achieved.

For example, when one of the first rotating electric machine MG1 and the second rotating electric machine MG2 that can efficiently operate receives the reaction force preferentially, the efficiency can be improved. As one example, if the engine speed is low when the vehicle speed is high, the case where the rotational speed of the first rotating electric machine MG1 becomes the reverse rotation can be considered. In this case, when the reaction force of the engine 1 is received by the first rotating electric machine MG1, the electric power is consumed, and this causes a reverse driving state in which the negative torque is generated and results in efficiency reduction.

Here, as seen from FIG. 7, in the hybrid vehicle driving apparatus 1-1 according to the present embodiment, the second rotating electric machine MG2 hardly makes the negative rotation in comparison with the first rotating electric machine MG1 and has much occasion to receive the reaction force in the state of the forward rotation. Thus, when the second rotating electric machine MG2 is made to receive the reaction force preferentially in the case where the first rotating electric machine MG1 makes the reverse rotation, the efficiency reduction due to the reverse driving can be prevented, and the improvement in the fuel economy can be obtained by the efficiency improvement.

Furthermore, when the torque is limited due to the heat in either one of the rotating electric machines, required reaction force can be achieved with the support of the other rotating electric machine in the regeneration (or output).

As described with reference to FIG. 8, the HV-2 mode has advantages in which the mechanical point is provided on the high gear side and thus the transmission efficiency during the high gear operation can be improved. In FIG. 8, a horizontal axis indicates change gear ratio, and a vertical axis indicates theoretical transmission efficiency. Here, the change gear ratio means the ratio of the rotational speed on the input side to the rotational speed on the output side of the planetary gear mechanisms 10, 20 (reduction gear ratio) and indicates the rotational speed of the first carrier 14 to the rotational speed of the ring gears 13, 23, for example. In the horizontal axis, the left hand side is the high gear side that has small change gear ratio, and the right hand side is a low gear side that has large change gear ratio. The theoretical transmission efficiency becomes the maximum efficiency of 1.0 when all the power inputted to the planetary gear mechanisms 10, 20 is transmitted to the output gear 6 through mechanical transmission without the electrical path.

In FIG. 8, a broken line 201 shows the transmission efficiency line during the HV-1 mode, and a solid line 202 shows the transmission efficiency line during the HV-2 mode. The transmission efficiency line 201 during the HV-1 mode becomes the maximum efficiency at the change gear ratio γ1. At the change gear ratio γ1, the rotational speed of the first rotating electric machine MG1 (first sun gear 11) becomes zero, and thus zero electrical path exists due to the receipt of the reaction force, and the operating point where the power can be transmitted from the engine 1 or the second rotating electric machine MG2 to the output gear 6 only through the mechanical transmission of the power can be obtained. This change gear ratio γ1 is the change gear ratio on the overdrive side, that is, the change gear ratio that is smaller than 1. This change gear ratio γ1 may be referred to as a "first mechanical transmission gear ratio γ1" herein. The transmission efficiency during the HV-1 mode moderately decreases as the change gear ratio becomes the value on the low gear side in comparison with the first mechanical transmission gear ratio γ1. In addition, the transmission efficiency during the HV-1 mode considerably decreases as the change gear ratio becomes the value on the high gear side in comparison with the first mechanical transmission gear ratio γ1.

The transmission efficiency line 202 during the HV-2 mode has the mechanical point at the change gear ratio γ2 in addition to the change gear ratio γ1 described above. This is because the gear ratios of the planetary gear mechanisms 10, 20 are determined so that the first rotating electric machine MG1 and the second rotating electric machine MG2 are arranged at the different positions on the horizontal axis in the collinear chart for the four elements (FIG. 7). In the HV-2 mode, the rotational speed of the first rotating electric machine MG1 becomes zero at the first mechanical transmission gear ratio γ1, and the first rotating electric machine MG1 receives the reaction force in this state, and thus the mechanical point can be achieved. Furthermore, at the change gear ratio γ2, the rotational speed of the second rotating electric machine MG2 becomes zero, and the second rotating electric machine MG2 receives the reaction force in this state, and thus the mechanical point can be achieved. This change gear ratio γ2 may be referred to as a "second mechanical transmission gear ratio γ2".

The transmission efficiency during the HV-2 mode considerably decreases in the range on the low gear side in comparison with the first mechanical transmission gear ratio γ1 in response to the increase in the change gear ratio in comparison with the transmission efficiency during the HV-1 mode. In addition, the transmission efficiency line 202 during the HV-2 mode curves to a low efficiency side in the range of the change gear ratio between the first mechanical transmission gear ratio γ1 and the second mechanical transmission gear ratio γ2. In this range, the transmission efficiency during the HV-2 mode is the same as or higher than the transmission efficiency during the HV-1 mode. Although the transmission efficiency during the HV-2 mode decreases in the range on the high gear side in comparison with the second mechanical transmission gear ratio γ2 in accordance with the decrease in the change gear ratio, it is relatively higher than the transmission efficiency during the HV-1 mode.

As described above, the HV-2 mode has the mechanical points at, in addition to the first mechanical transmission gear ratio γ1, the second mechanical transmission gear ratio γ2 on the high gear side in comparison with the first mechanical transmission gear ratio γ1, and thus the improvement in the transmission efficiency during the high gear operation can be achieved. Accordingly, the fuel economy can be improved by the improvement in the transmission efficiency during the high-speed driving.

The hybrid vehicle driving apparatus 1-1 according to the present embodiment appropriately changes the HV-1 mode and the HV-2 mode during the hybrid driving and thus can improve the transmission efficiency. For example, the transmission efficiency can be improved in the broad range of change gear ratio from a low gear range to a high gear range by selecting the HV-1 mode in the range of the change gear ratio on the low gear side in comparison with the first mechanical transmission gear ratio γ1 and selecting the HV-2 mode in the range of the change gear ratio on the high gear side in comparison with the first mechanical transmission gear ratio γ1.

### (HV-3 Mode)

When the brake 4 and the clutch 5 are disengaged, a Mode 5 (Driving mode 5) is implemented, and the driving according to the Mode 5 is enabled. In the present embodiment, the following HV-3 mode corresponds to the Mode 5. The HV-3 mode is a driving mode in which the second rotating electric machine MG2 can be disengaged and the engine 1 and the first rotating electric machine MG1 can be used to drive. In the HV-1 mode described above, the brake 5 is engaged, and thus the second rotating electric machine MG2 is interlocked with the rotation of the second ring gear 23 and rotates all the time during the driving. The second rotating electric machine MG2 cannot output a large torque and the rotation of the second ring gear 23 is increased in speed and transmitted to the second sun gear 21 at high rotational speed, and thus it is not always preferable that the second rotating electric machine MG2 be kept rotating all the time during the high vehicle speed from the point of view of the efficiency improvement.

In the HV-3 mode, the brake 5 is disengaged and the clutch 4 is also disengaged, and thus the second rotating electric machine MG2 can be disengaged from a transmission path of the power to be stopped. In the HV-3 mode, the dragging loss of the second rotating electric machine MG2 during disuse can be reduced by disengagement of the second rotating electric machine MG2 from the wheel at high vehicle speed, and additionally the limitation on the maximum vehicle speed due to the maximum permissible rotational speed of the second rotating electric machine MG2 can be eliminated.

The hybrid vehicle driving apparatus 1-1 according to the present embodiment can selectively implement three modes of the HV-1 mode, the HV-2 mode, and the HV-3 mode in the hybrid driving in accordance with the combination of engagement/disengagement of the clutch 4 and the brake 5. For example, the HV-1 mode may be selected in the range of the highest reduction gear ratio, while the HV-3 mode may be selected in the range of the lowest reduction gear ratio, and the HV-2 mode may be selected in the range of intermediate reduction gear ratio. In addition, any two modes of the three HV modes described above may selectively be implemented. For example, either of the HV-2 mode or the HV-3 mode may be selected in the case of low reduction gear ratio, and the HV-1 mode may be selected in the case of high reduction gear ratio.

As described above, the hybrid vehicle driving apparatus 1-1 according to the present embodiment has two planetary gears 10, 20, two rotating electric machines MG1, MG2, one brake 5, and one clutch 4 and can configure a plurality of hybrid modes (THS mode, combined split mode, and high vehicle speed mode) and two EV driving modes that has different driving speeds of the rotating electric machines in accordance with the engagement/disengagement of the brake 5 and the clutch 4. The hybrid vehicle driving apparatus 1-1 according to the present embodiment can configure multiple modes with a small number of the engaging elements and can offer both the efficiency improvement by the driving in a suitable mode for the driving condition and the reduction in the number of components or the cost.

In addition, the hybrid vehicle driving apparatus 1-1 according to the present embodiment is provided with the output shaft that is connected in the outermost diameter and thus easily applied to the hybrid vehicle 100 with an FF layout in which a multiple shaft structure is required. In the planetary gear mechanisms 10, 20, the parts that are operated at the maximum rotation are the sun gears 11, 21 near the rotation center, and thus centrifugal force can be restrained, and the advantage in strength can be offered.

### [First Modification of First Embodiment]

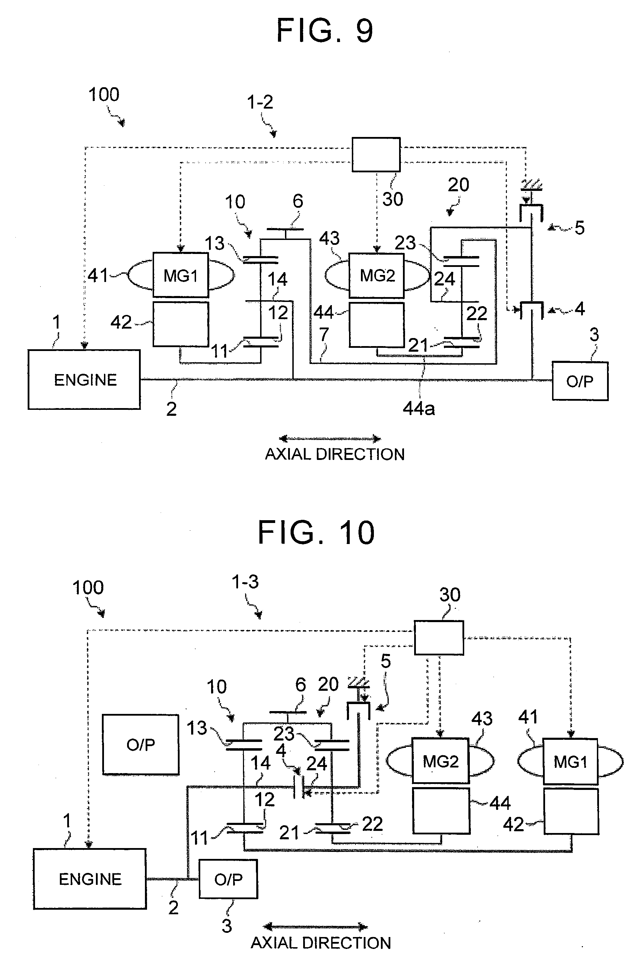

A first modification of the first embodiment will be described. FIG. 9 is a schematic diagram that shows the principal parts of the hybrid vehicle according to the first modification. In the hybrid vehicle driving apparatus 1-2 according to the present modification, a different point from the hybrid vehicle driving apparatus 1-1 according to the first embodiment described above is that the second planetary gear mechanism 20, the clutch 4, and the brake 5 are disposed on the opposite side to the side of the first planetary gear mechanism 10 with the second rotating electric machine MG2 therebetween. On the same axis as the rotating shaft 2 of the engine 1, the first rotating electric machine MG1, the first planetary gear mechanism 10, the second rotating electric machine MG2, the second planetary gear mechanism 20, the clutch 4, and the brake 5 are disposed in this order from the side close to the engine 1.

The correspondence relation of the connections among the rotating elements 11, 13, 14 of the first planetary gear mechanism 10, and the engine 1, the first rotating electric machine MG1, and the output gear 6 is common with the first embodiment described above. In addition, the correspondence relation of the connections among the rotating elements 21, 23, 24 of the second planetary gear mechanism 20, and the second rotating electric machine MG2, the clutch 4, the brake 5, and the output gear 6 is common with the first embodiment described above.

The first ring gear 13 and the second ring gear 23 are connected to each other through a connecting shaft 7. The connecting shaft 7 is disposed between a rotating shaft 44a of a rotor 44 in the second rotating electric machine MG2 and the rotating shaft 2 of the engine 1. The clutch 4 and the brake 5 are disposed in an end opposite to the side of the engine 1 in the axial direction. As described above, the clutch 4 and the brake 5 are disposed together in one end of the hybrid vehicle driving apparatus 1-2 in the axial direction, and therefore the structure of the actuator is simplified. For example, when the hydraulic actuator is employed as the actuator for the clutch 4 and the brake 5, the hydraulic system can be disposed collectively at one place.

### [Second Modification of First Embodiment]

A second modification of the first embodiment will be described. FIG. 10 is a schematic diagram that shows the principal parts of the hybrid vehicle according to the second modification. In the hybrid vehicle driving apparatus 1-3 according to the present modification, a different point from the hybrid vehicle driving apparatus 1-1 according to the first embodiment described above is that the mechanical systems including the first planetary gear mechanism 10, the second planetary gear mechanism 20, the clutch 4, and the brake 5 are collectively disposed on the engine side in the axial direction, and the electric systems including the first rotating electric machine MG1 and the second rotating electric machine MG2 are collectively disposed on the opposite side to the engine side in the axial direction. On the same axis as the rotating shaft 2 of the engine 1, the first planetary gear mechanism 10, the clutch 4, the second planetary gear mechanism 20, the brake 5, the second rotating electric machine MG2, and the first rotating electric machine MG1 are disposed in this order from the side close to the engine 1.

The electric system and the mechanical system are separated from each other, and thus the cases for storing the systems can be separated. In addition, each of the electric system and the mechanical system is collectively disposed, and thus the electric system and the mechanical system can be produced in the separate processes in advance, and each system can be assembled as one unit.

Furthermore, although FIG. 10 shows the first rotating electric machine MG1 and the second rotating electric machine MG2 in the same size, either one of them, for example, the second rotating electric machine MG2 is larger than the first rotating electric machine MG1 in the actual size. In this case, the first rotating electric machine MG1 is disposed in a space in a radial inside of the stator 43 for the second rotating electric machine MG2 to be nested, and therefore the space in the axial direction can be reduced, and the size reduction of the hybrid vehicle driving apparatus 1-3 can be achieved.

It should be noted that the alignment order of the first rotating electric machine MG1, the second rotating electric machine MG2, the first planetary gear mechanism 10, the second planetary gear mechanism 20, the clutch 4, and the brake 5 is not limited to the examples described in the first embodiment and the modifications.

### [Second Embodiment]

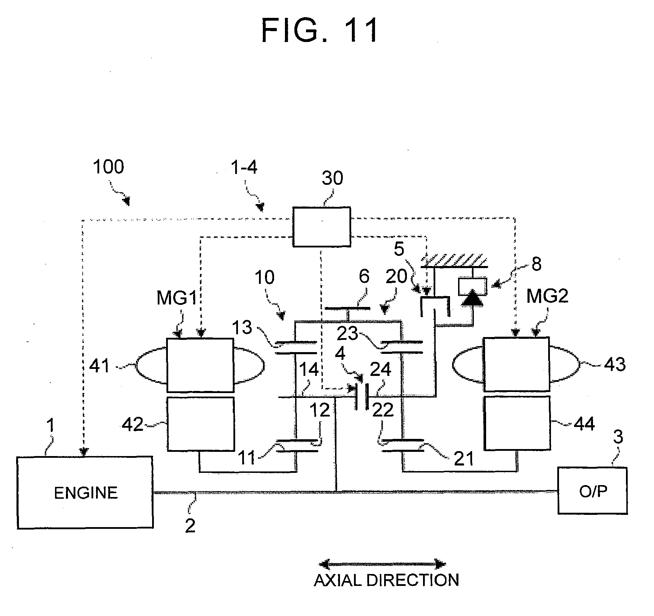

A second embodiment is described with reference to FIG. 11. In the second embodiment, the components that have the similar functions to those described in the above embodiment are denoted with the same or similar reference numerals and symbols, and the descriptions thereof are not repeated herein. FIG. 11 is a schematic diagram that shows the principal parts of the hybrid vehicle according to the second embodiment. In the hybrid vehicle driving apparatus 1-4 according to the present embodiment, a different point from the hybrid vehicle driving apparatus 1-1 according to the first embodiment described above is that a one-way clutch 8 disposed in parallel with the brake 5 is provided. The one-way clutch 8 can permit the rotation of the second carrier 24 in only one direction and regulate the rotation in the other direction. The second carrier 24 is connected to the vehicle body side, for example, a transaxle case through the one-way clutch 8.

The one-way clutch 8 can permit the rotation of the second carrier 24 in the forward direction and regulate the rotation in the reverse direction. Accordingly, the EV-1 mode (see FIG. 3) can be implemented without the engagement of the brake 5. That is to say, in a state where the clutch 4 and the brake 5 are disengaged, when the second rotating electric machine MG2 outputs the negative torque to make the reverse rotation, the one-way clutch 8 regulates the rotation of the second carrier 24 in the reverse direction. Consequently, similar to the EV-1 mode in which the brake 5 is engaged, the second ring gear 23 can make the forward rotation by the torque from the second rotating electric machine MG2, and the hybrid vehicle 100 can be driven in the forward direction.

The engagement of the brake 5 is not required during the start in the EV-1 mode. Thus, when the hydraulic actuator is employed for the brake 5, the operation of the electric oil pump is not required in a stop state and like. Therefore, the control can be simplified, and the energy required for the driving of the electric oil pump can be reduced.

The disclosure described in the above embodiments and modifications can be implemented by combining them appropriately.

### DESCRIPTION OF REFERENCE NUMERALS AND SYMBOLS

1-1, 1-2, 1-3, 1-4: HYBRID VEHICLE DRIVING APPARATUS
1: ENGINE
4: CLUTCH
5: BRAKE
6: OUTPUT GEAR
10: FIRST PLANETARY GEAR MECHANISM
11: FIRST SUN GEAR
13: FIRST RING GEAR
14: FIRST CARRIER
20: SECOND PLANETARY GEAR MECHANISM
21: SECOND SUN GEAR
23: SECOND RING GEAR
24: SECOND CARRIER
100: HYBRID VEHICLE
MG1: FIRST ROTATING ELECTRIC MACHINE
MG2: SECOND ROTATING ELECTRIC MACHINE

## Claims

1. A hybrid vehicle driving apparatus comprising:
a first planetary gear mechanism;
a second planetary gear mechanism;
a clutch that connects and disconnects a carrier of the first planetary gear mechanism to and from a carrier of the second planetary gear mechanism; and
a brake that regulates the rotation of the carrier of the second planetary gear mechanism by engaging,
wherein a sun gear, the carrier, and a ring gear of the first planetary gear mechanism are respectively connected to a first rotating electric machine, an engine, and a driving wheel, and
a sun gear and a ring gear of the second planetary gear mechanism are respectively connected to a second rotating electric machine and the driving wheel.

2. The hybrid vehicle driving apparatus according to claim 1,
wherein the brake and the clutch are independently engaged, and thus driving according to a Mode 2 is enabled.

3. The hybrid vehicle driving apparatus according to claim 1 or 2,
wherein an alignment order of rotating elements of the first planetary gear mechanism and the second planetary gear mechanism in the collinear chart when the clutch is engaged and the brake is disengaged is in the order of the sun gear of the first planetary gear mechanism, the sun gear of the second planetary gear mechanism, the carrier of the first planetary gear mechanism and the carrier of the second planetary gear mechanism, and the ring gear of the first planetary gear mechanism and the ring gear of the second planetary gear mechanism.

4. The hybrid vehicle driving apparatus according to claim 1 or 2,
wherein, in hybrid driving in which the hybrid vehicle is driven by at least the engine as a power source, at least two modes of a Mode 3 in which the clutch is disengaged and the brake is engaged, a Mode 4 in which the clutch is engaged and the brake is disengaged, a Mode 5 in which the clutch and the brake are disengaged can be selectively implemented.

5. The hybrid vehicle driving apparatus according to claim 1 or 2,
wherein the driving according to a Mode 1 is enabled by disengaging the clutch and engaging the brake.

6. The hybrid vehicle driving apparatus according to claim 1,
wherein, on the same axis as a rotating shaft of the engine, the first rotating electric machine, the first planetary gear mechanism, the clutch, the second planetary gear mechanism, the brake, and the second rotating electric machine are disposed in this order from a side close to the engine.

7. The hybrid vehicle driving apparatus according to claim 1,
wherein, on the same axis as a rotating shaft of the engine, the first rotating electric machine, the first planetary gear mechanism, the second rotating electric machine, the second planetary gear mechanism, the clutch, and the brake are disposed in this order from a side close to the engine.

8. The hybrid vehicle driving apparatus according to claim 1,
wherein, on the same axis as a rotating shaft of the engine, the first planetary gear mechanism, the clutch, the second planetary gear mechanism, the brake, the second rotating electric machine, and the first rotating electric machine are disposed in this order from a side close to the engine.

9. The hybrid vehicle driving apparatus according to claim 1, further comprising
a one-way clutch that permits the rotation of the carrier of the second planetary gear mechanism in a forward direction in the case where a rotational direction of the ring gear of the second planetary gear mechanism when the hybrid vehicle travels forward is determined to be the forward direction, and regulates the rotation in an opposite direction to the forward direction.
